# EUROPEAN PATENT APPLICATION

(11) **EP 1 541 528 A1**
(43) Date of publication of application: **15.06.2005**
(21) Application number: 03028188.5
(22) Date of filing: 08.12.2003
(51) Int. Cl.: C01G 39/00, C01G 41/00, C01G 1/00

(54) **Quasi-one-dimensional polymers based on the metal-chalcogen-halogen system**

(71) Applicant: INSTITUT JOZEF STEFAN, 1000 Ljubljana (SI)
(72) Inventor: Jesih, Adolf, Josef Stefan Institut, 1000 Ljubljana (SI); Mihailovic, Dragan, Josef Stefan Institut, 1000 Ljubljana (SI); Remskar, Maja, Josef Stefan Institut, 1000 Ljubljana (SI); Mrzel, Ales, Josef Stefan Institut, 1000 Ljubljana (SI); Vrbanic, Daniel, Josef Stefan Institut, 1000 Ljubljana (SI)
(74) Representative: Becker Kurig Straus

(57) **Abstract**

The present invention relates a quasi-one-dimensional material with sub-micron cross-section described by the formula M₆C_{y}H_{z}, where the M = transition metal, C = chalcogen, H = halogen, and where y and z are integers such that 8.2<y+z<10, which materials are synthesized in a single-step procedure at temperatures above 1000 °C. The present invention also concerns the use of these materials in electronic, chemical, optical or mechanical applications.

## Description

The present invention relates to air-stable, monodisperse quasi-one-dimensional materials synthesised with sub-micron cross-section and described by the formula M₆C_{y}H_{z}, wherein M = transition metal, C = chalcogen, H = halogen, and wherein y and z are real numbers such that 8.2 < (*y*+*z*) < 10. These materials may be synthesized in a single-step procedure at temperatures above 1000 °C. The present invention also concerns the use of these materials in electronic, chemical, optical or mechanical applications.

### Background of the invention

Carbon nanotubes as reported by Ijima (I. Ijima, Nature **56** (1991), 354) have many functional properties, which makes them important in numerous different applications, ranging from nanoelectronics to components in composites, as chemical and nano-electromechanical sensors and various other devices (R.H.Baughman, A.A.Zakhidov and Walt A. de Heer, Science **297** (2002), 789). Carbon nanotubes are synthesised such that many different varieties of material are grown simultaneously, so that the nanotubes typically grow all of different diameters, chiralities and with different physical and electronic properties. Moreover the use of metal catalysts in the synthesis strongly inhibits the separation of nanotubes without damage. The catalyst particles are typically covered with carbon layers, which also covalently bind to the nanotubes making separation exceedingly difficult. Also, the synthesis methods presently used, such as in an arc discharge or by laser ablation, are rather unsuitable for easy scaling up of production volume of monodisperse single-species nanotubes or nanowires.

Inorganic nanotubes based on transition metal chalcogenides have been synthesised and proposed as a possible alternative to carbon nanotubes in many existing applications and some new ones. US-P-6,217,843, (Appl. No. 308663) and US-P-5,958,358 (Appl. No. 657431)) refer to a method of preparation of nano-particles of metal oxides and to metal-intercalated and/or metal caged "inorganic fullerene-like" structures of metal chalcogenides obtained therefrom fullerene-like structures of dichalcogenide nanotubes. However, the materials synthesized in this way are non-monodisperse, contain a small proportion of single-wall and multi-wall nanotubes with different diameters and divergent wall layer thicknesses, onion-like multi-layer fullerene structures and other materials. Although no catalyst particles are present, separation of the material synthesised in this way into specific components is difficult, and use of any one of the components is consequently very limited for many applications. Moreover the synthesis procedure described in the above patents involves multiple steps and cannot be easily performed by a single step process, making scaling up relatively difficult.

Rem 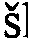 kar M. et al. (Science 292 (2001), 479-481) and PCT/SI01/00027 refer to the synthesis of quasi-one-dimensional nanostructures, called bundles of nanotubes in a fullerene-assisted transport reaction and have a formula MoS₂I_{1/3}. The synthesis of the material requires a transport reaction, which is relatively complex, and is not suitable applications where larger amounts of material are required.

Many different compounds in the ternary system Mo-S-I are known, but do not have the desirable quasi-one-dimensional properties relevant for nano-scale applications. C.Perrin et al. describe in Soc. Chim. France **8** (1972), 3086) the synthesis of Mo₂S₅I₃, and V.E.Fedorov et al. Refer in Sibir. Ord. Akad. Nauk SSSR, Ser. Khim. Nauk 6 (1978), 56 to synthesis of compound Mo₃S₇I₄, while C. Perrin et al. refer. in Acad. Sci. Paris C **280** (1975), 949,) to the synthesis of Mo₄S₄I₄. The article of M. Potel et al. in Revue de Chimie minerale, **21** (1984), 509 reports the synthesis of Mo₆S₈, Mo₉S₁₁, Mo₁₅Se₁₉ and Mo₆C₆ (C = chalcogen). C. Perrin and M. Sergent refer in J. Chem. Res (S) 38 (1983) to the synthesis of Mo₆S₂I₈. The article of R. Chevrel et al. in J. Sol. Stat. Chem. 3 (1971), 515 reports the synthesis of new ternary sulfurated phases of molybdenum with the general formula M_{w}Mo₆Se₈ (wherein M is a metal and w < 4). However, none of the above mentioned materials have been reported to grow with a one-dimensional morphology or have a structure, which can be described as sufficiently one-dimensional to allow applications as nanowires or nanorods.

The articles of F. Jellinek (Nature **192,** (1961), 1065) and Jellinek et al. (Acta Cryst. **B24** (1968), 1102) describe the synthesis of Nb₂Se₃ and Ta₂Se₃, which are described as needle-like mm-size crystals, and whose crystal structure have been determined to be quasi-one-dimensional. The structure of Mo_{2.065}S₃ is reported by R. Deblieck et al. 77 (1983), 249 Paper is missing) !). These materials do not grow in the form of nanowires or nanorods, however and are not known to be dispersible into nanowires or nanorods.

The article of R. Chevrel et al. (Mat. Res. Bull. **9** (1974), 1487) reports on the synthesis of Mo₃S₄, while the analogues Mo₃Se₄ (A. Opalowski and V. Fedorov, Iz. Akad. Nauk SSSR Neorg. Mat. **2**-**3** (1966), 443) and Mo₃Te₄ (M. Spiesser, thesis, 1971) are also known to exist. The morphology of the materials is not quasi-one-dimensional, however.

P.C. Perrin et al. describe in Acta Crystallographica C 39 (1983), 415 the synthesis of Mo₆Br₆S₃ at a temperature of 1200 °C which is a two-dimensional layered material and grows in the form of platelets, not nanowires or nanorods or quasi-onedimensional objects.

Sergent M. et al. describe in the Journal of Solid State Chemistry 22 (1977), 87-92 to the synthesis of a series of quasi-one-dimensional compounds which are composed of transition metal clusters, surrounded by chalcogen atoms and other transition metal ions or alkali metal ions with the formula M₆C₆H₂ wherein M is a transition metal ion, C is a chalcogen and H is Br or I. In the article L. Sol. Stat. Chem. **35** (1980), 286-290,) (M.Potel et al. describe a series of similar compounds with interstitial substitutions with the formulae M₂Mo₆Se₆ (M = Na, In, K, Tl), M₂Mo₆S₆ (M = K, Rb, Cs) and M₂Mo₆Te₆ (M = In, Tl). Tarascon et al. in J. Sol. Stat. Chem. **58** (1985), 290), and Hombostel et al. in Nanotechnology **6** (1995) 87-91 report that M₂Mo₆C₆ (C = Se, Te and M= Li or Na) can be dispersed in various highly polar solvents such as dimeythylsufoxide or N-methylformamide into fibers as described. These fibers are produced by two-step synthesis first of InMo₃Se₃ and then oxidized in solution with HCl to give (Mo₃Se₃)_{∞} fibers. The fibers produced this way can be stabilized by solvated ions in solution, but they are unstable in air and are not really suitable for applications as individual nanofibers or nanowires.

A problem of the present invention is to provide improved materials, which may be used in a variety of different applications such as nano-electromechanical devices or sensors (NEMS).

### Summary of the invention

This problem has been solved by providing novel quasi-one-dimensional materials which grow in the form of nanowires of sub-micron cross-section of the general formula M₆C_{*y*}H_{*z*}, wherein M = transition metal, C = chalcogen, H = halogen, and wherein y and z are real numbers such that 8.2 < (*y*+*z*) <1 0, which are synthesized in a single-step procedure at temperatures above 1000 °C.

During extensive experiments the present inventors surprisingly noted that when maintaining a ratio of the above indicated ingredients within the limits of 8.2 < *(y+z)* <1 0 and performing the method of synthesis at a temperature exceeding 1000 °C, always materials showing a quasi three dimensional structure (i.e. being in the form of three dimensional crystals) are obtained which are air stable in contrast to prior art materials. Without wishing to be bound to any theory, the as-grown material structure are considered to represent bundles exhibiting a small diameter with 1-dimensional subunits, whose structure is wire-like at the molecular level, or bundles of one-dimensional polymers of Mo₆S_{y}I_{z} clusters, or bundles composed of inorganic molecular wires.

The materials have the advantages of advantages in that the bundles of (Mo₆S_{y}I_{z}) may be controllably dispersed into smaller ones, obtaining monodisperse dispersions of different diameters, the dispersed samples are stable in air and the synthesis of the material is straightforward (as compared e.g. to carbon nanotubes, which are functionally similar). The material obtained in this way does not contain no significant amounts of impurities, with the impurities still present not being chemically attached to the bundles of the material, while the as-grown wires may be longer than 1 mm, with sub-micron diameter.

In the Figures,

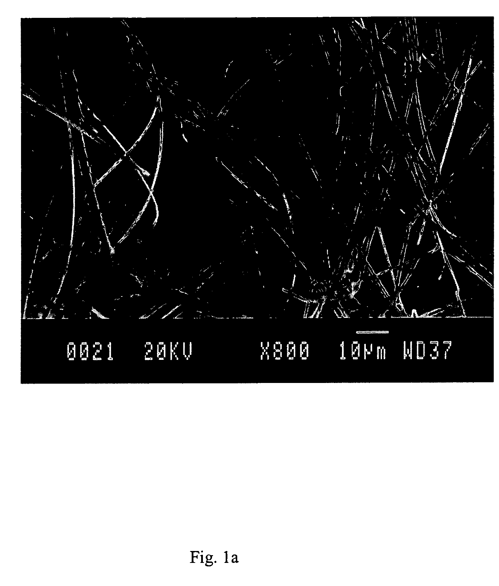

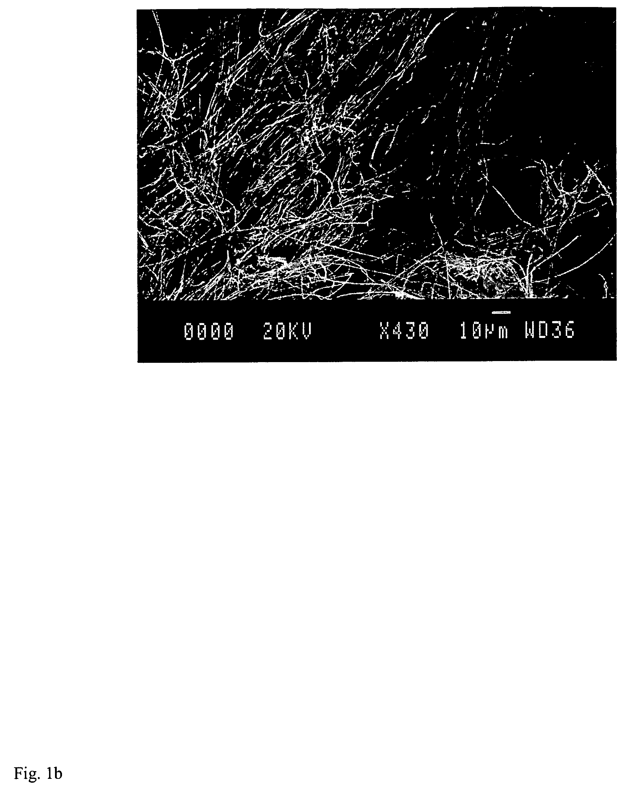

Fig. 1a is a typical SEM image of Mo₆S₃I₆ nanowires (the scale bar represents 10 µm);
Fig. Ibis a typical SEM image of Mo₄S₃I₃ nanowires (the scale bar represents 10 µm);
Fig. 2a is a typical HRTEM image of Mo₆S₃I₆ nanowire in the longitudinal direction (the scale bar represents 10 nm);
Fig. 2b is a typical TEM image of Mo₆S_{4.5}I_{4.5} nanowire (the scale bar represents 50 nm);
Fig. 2c is a typical TEM image of Mo₆S_{4.5}I_{4.5} nanowire (the scale bar represents 10 nm);

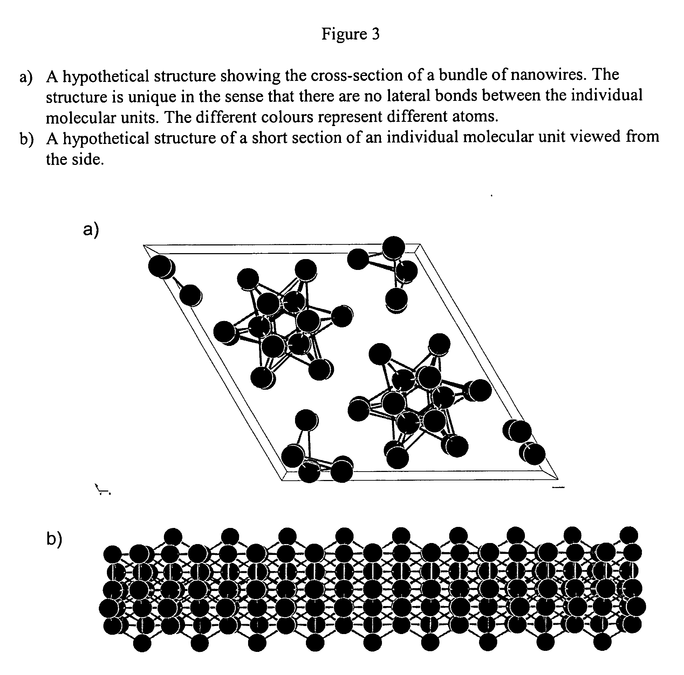

Fig. 3a shows a hypothetical structure showing the cross-section of a bundle of nanowires.
Fig. 3b shows a hypothetical structure of a short section of an individual molecular unit viewed from the side.

The compounds in the present invention differ from the known materials described in the first section by their stoichiometry and/or their composition. The materials are stable in air and may be prepared in suspensions in polar fluids, such as water as well as non-polar organic liquids. It may be used in applications for field emission tips, as lubricants, in nanoelectronics and batteries, as sensor templates etc., and can be doped with other alkali ions or molecules, with a wide range of potential applications.

According to a preferred embodiment the material M is a transition metal selected from the group consisting of Mo, W, V, Ti, Ta, Nb, Zn, Hf, Re and Ru.

C may be any chalcogen but is preferably sulfur, selenium or tellurium. H may be any halogen, but is preferably Iodine or Bromide.

According to another preferred embodiment 0<y<10 and 0≤z<10 while y+z>8.2. Also, in a specific embodiment, 8.2 < (*y* + *z)* < 10 and preferably *y* + *z* = 9.

The invention relates to carbon nanotubes in that the form of growth and synthesis and preparation is such that it gives rise to similar appearance on the nanoscale. As is described by the terminology used in the field, the form of nanoropes, nanorods and nanowires.

The invention relates to previous synthesis of M₆C₈₋ₓTₓ, (M = transition metal, C = chalcogen, T = transition metal) and M₆C₈₋ₓAₓ, (M = transition metal, C = chalcogen, A = alkali metal) all of which are synthesized below 1000 °C. The present invention differs from the compounds described in the previous statement by the synthesis being performed above 1000 °C, surprisingly yielding quasi-one dimensional objects in the form of nanoneedles, nanorods, nanowires or nanowhiskers.

The present invention also relates to previously known forms of transition metal chalcogenide halides different stoichiometry, namely 662 stoichiometry, such as Mo₆Se₆I₂ , which grow in the form of well-defined crystals. These materials have a well-defined crystal structure and also grow in the form of whiskers or rods. The present invention covers stoichiometries which differ from 662. The structural coherence is not present over distances more than 50 nm, arising from intrinsic reasons, such as bending or malleability of the material, which distinguishes the materials in this invention from crystalline whiskers or small crystals.

The present invention relates to chain compounds with the formula MₓC_{y} such as Mo₂S₃ which have a different stoichiometry.

The present invention relates to a MₓC_{y}H_{z} material such as MoS₂I_{1/3} which is grown in a modified transport reaction involving fullerenes such as C₆₀ and C₇₀. The present invention refers to material which differs from compounds such as MoS₂I_{1/3} by the method of synthesis and by stoichiometry.

The invention relates to items and devices, methods of making and using them and related systems on the scale of nanometers and micrometers.

The present materials may be used in composites with enhanced mechanical, thermal or electrical properties, as battery electrodes, it may be with electrons or holes, as nanoconnectors, in nanodevices (e.g. FETs) in either metallic or semiconducting form depending on doping, connected to gold particles, as replacement material for carbon nanotubes, in applications which require one-dimensional structure or properties arising from confinement of electrons to one dimension, as field emission tips, as coatings, as catalyst, as superconductors, as carriers for functionalized sensors and detectors, as material utilising special chemical properties for attachment of various kinds of molecules or to surfaces, as solid-state lubricant and as additive material in liquid lubricants.

In particular, the present materials may be embodied in a thin film or single rope, strand, needle, whisker or wire of said material deposited by evaporation of solvents, or electrodeposition including electrophoresis, dielectrophoresis etc. ,or in device made of single strands, multi-strand whiskers, ropes or rods of the Mo-S-I system, with items (i.e. atoms, molecules, contacts) attached either by van der Waals forces, via charge transfer or covalent bonding for purposes of functionalization and use for sensors, detectors, in which the specific chemical properties of the Mo-S-I materials are utilized, or as functionalised single strands, multi-strand whiskers, ropes or rods of the Mo-S-I system as in claim above in which a bond is made to the chalcogen (e.g.sulphur) or transition metal (e.g. molybdenum) or halogen (iodine).

Said structures, which, when incorporated into devices using attached gold particles can form sensors, or on surfaces as films, used as an interface to temporary or permanent attachment of organic molecules via sulphur and/or carbon atom.

In another embodiment, the invention is embodied as a conducting or superconducting wire, or rope or rod or whisker, composed of smaller wires, etc. which range in diameter from 0.2 nanometers to 10 micrometers.

Said structures, which when dispersed into smaller bundles, ropes or individual tubes can act as lubricants, additives to lubricants, or components in composite materials in which friction can be reduced with or without the combination of increased strengths and/or enhanced electrical or thermal properties.

In one aspect, the invention comprises the methods of growing, assembling and otherwise making articles and devices. In one embodiment a method of the invention involves growing rod-like, wire-like or rope-like objects composed of smaller quasi-one-dimensional subunits made of transition metal and chalcogen in various stoichiometry. In another embodiment, in addition to transition metal and chalcogen the objects may contain also other doped atoms or ions, or interstitial atoms, ions or molecules including halogens, other transition metals, rare-earth metals, organic donors etc.

In one embodiment, the invention pertains to the synthesis of material under specific conditions above 1000 °C which has a particular shape of microrods, nanorods and nanowires, nanowhiskers, nanoropes, ranging in diameters from a few microns to a few nanometers. These microrods, nanorods and nanowires are typically composite objects, composed of thin one-dimensional objects such as wires, strings or clusters of atoms arranged in straight or staggered chains or ladders.

In another embodiment the invention is described as material whose wire-like or rod-like shape concentrates electric fields at their tips.

In another embodiment the invention is described as a conducing nanowire, nanorope, nanorod, etc. of intertwined strands of smaller wires, strands ranging in diameter from 0.4 nm to 10000 nm.

The following examples illustrate the invention without limiting it thereto.

### Example 1

### Synthesis

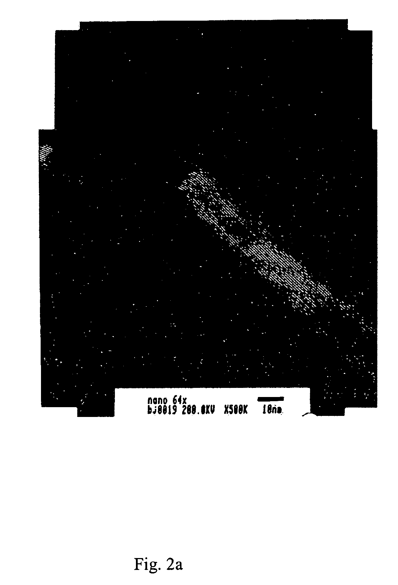

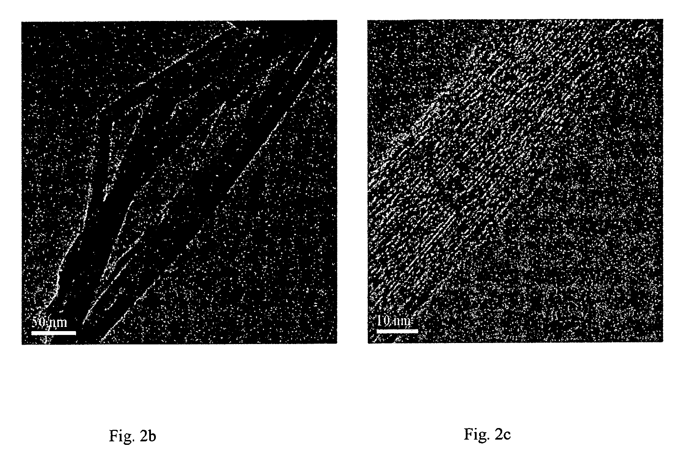

The synthesis is performed in a sealed and evacuated quartz ampoule having diameter of 19 mm and a length of 140 mm, (remaining gas pressure < 10⁻³ torr) containing platelets of Mo sheet metal (Aldrich, molybdenum foil 0.1 mm thick, 99.9+%), S (Aldrich, sulfur powder, 99.98 %) and I₂ (Aldrich, 99.999+%) in the amounts 6:4:6 (Mo: 0.8925 g, S: 0.1988 g, I₂: 1.1805 g). The ampoule is placed in a single-zone furnace ( LINDBERG STF 55346C) and heated from room temperature to a temperature of 1070 °C at a rate 8 K per hour. This temperature is kept stable for 72 hours. The ampoule is then cooled at 1,5 K per minute. The resulting material contains a large amount of material in the form of furry-like material (Figure 2), which upon closer examination contains ropes of material with stoichiometry given by Mo₆S₃I₆.

### Composition

The composition, as determined by EA (elemental analysis) is given as Mo₆S₃I₆.
found, %: Mo 40,4; S 6,4; I 53,1. (measurement tolerance ± 0,2 - 0,3 %)
calculated for Mo₆S₃I₆, % : Mo 40,2; S 6,7; I 53,1.
The chemical composition corresponds to the molar ratio Mo : S : I = 2 : 1 : 2.

### Structure

The structure of the material as grown is essentially crystalline in the usual sense. X-ray data shown rather broad peaks with no narrow well-defined sharp crystal peaks.

### Example 2.

### Synthesis

The synthesis is performed in sealed and evacuated quartz ampoule (diameter 19 mm, length 140 mm), (remaining gas pressure < 10⁻³ torr) containing platelets of Mo sheet metal (Aldrich, molybdenum foil 0.1 mm thick, 99.9+%), S (Aldrich, sulfur powder, 99.98 %) and I₂ (Aldrich, 99.999+%) in the amounts 6:4:4 (Mo: 0.8981 g, S: 0.2000 g, I₂: 0.7919 g). The ampoule is placed in a single-zone furnace (LINDBERG STF 55346C) and heated from room temperature to a temperature of 1150 °C at a rate 8 K per hour. This temperature is kept stable for 72 hours. The ampoule is then cooled at 1,5 K per minute. The resulting material contains a large amount of material in the form of furry-like material (Figure 2), which upon closer examination contains ropes of material with stoichiometry given by Mo₆S_{4.5}I_{4.5}.

### Composition

The composition, as determined EA (elemental analysis) is given as Mo6S_{4.5}I_{4.5}.

| | | | |
|---|---|---|---|
| found % | Mo 43,5; | S 11,2; | I 45,3 (measure tolerance ± 0,3%) |
| calculated for Mo6S_{4.5}I_{4.5}, % | Mo 44,6; | S 11,2; | I 44,2. |

The chemical composition corresponds to the molar ratio Mo : S : I = 1,3 : 1 : 1.

### Structure

The structure of the material as grown is not crystalline in the usual sense, particularly along the direction of the wires, because of the very weak forces in-between the wires. X-ray data shown rather broad peaks with no narrow well-defined sharp crystal peaks, particularly in the direction along the wires.

The microscopic structure cannot be described in terms of rolled-up sheets of layered dichalcogenide material, and cannot be described to be fullerene-like in structure.

The morphology of the material is in the form of needles or ropes or wires, composed of small-diameter columnar structures.

The material can be dispersed in a variety of solvents, such as isopropanol, methanol, water etc., using an ultrasonic bath, to various degrees, where the mean diameter of the nanowires thus obtained depends on the dilution and on the extent of sonification. Thinner diameters are obtained with more dilute solutions, and monodisperse dispersions of nanowires with mean diameter less than 4 nm can be obtained using this method with dilutions.

The materials are grown at temperatures above 1000 °C. Their stoichiometry is variable, and different compounds exist, which have different values y and z.

## Claims

1. A material of the general formula M₆C_{*y*}H_{*z*}, wherein M designates a transition metal, C designates a chalcogen, H designates a halogen, and wherein y and z may be of from 0 to 10 such that 8.2<y+z<10, grown in the form of nanowires, nano-ropes, nanorods, whiskers or needles and obtainable by a process comprising the steps of mixing the constituent elements in the desired mass ratio, placing them in an appropriate container, evacuating the container and heating it to a temperature above 1000 °C for a predetermined length of time.

2. The material according to claim 1, wherein M is a transition metal selected from the group consisting of Mo, W, V, Ti, Ta, Nb, Zn, Hf, Re and Ru.

3. The material according to claim 1 or 2, wherein C = S, Se, Te.

4. The material according any of the preceding claims, wherein the halogen H= I, Br.

5. The material according to any of the preceding claims, wherein 0<y<10, 0<z<10 and 8.2≤*y*+*z*<10.

6. The material according to any of the preceding claims, wherein H may be replaced by an ion elected from the group consisting of elements in the groups III-VIII.

7. The material according to any of the preceding claims, additionally containing intercalated or interstitial ions, atoms or molecules, selected from the group consisting of alkali metals, alkaline-earth metals, transition metals, elements belonging ro groups III-VIII and any organic donors or acceptors..

8. The material according to any of the preceding claims exhibiting a substantially circular cross-section.

9. The material according to any of the preceding claims, which is superconducting.

10. The material according to any of the preceding claims, which is metallic or semiconducting.

11. A method for the production of a material according to any of the claims 1 to 11, which comprises the steps of (i) mixing of the individual constituent elements, (ii) heating in a sealed container under reduced pressure, (iii) heating above a temperature of 1000 C or more for any duration of time.

12. The method according to claim 11, wherein the elements themselves are replaced by compounds of those elements such as MoS₂ for example.

13. Use of a material according to any of the preceding claims in electronic, chemical, optical or mechanical applications.

14. Use of a material according to any of the claims 1 to 12 as a catalyst in dry form or in suspension or as a catalytic component.
